(19) **Europäisches Patentamt**

**European Patent Office**

**Office européen des brevets**

(11) **EP 1 182 798 B1**

(12) **EUROPEAN PATENT SPECIFICATION**

(45) Date of publication and mention
of the grant of the patent:
**18.06.2003 Bulletin 2003/25**

(51) Int Cl.⁷: **H04B 7/005**

(21) Application number: **01301707.4**

(22) Date of filing: **26.02.2001**

(54) **A channel assisted power control technique**

Kanalgestützte Leistungsregelungsverfahren

Technique de commande de la puissance de voie assistée

(84) Designated Contracting States:
**DE FR GB IT**

(30) Priority: **18.08.2000 US 641212**

(43) Date of publication of application:
**27.02.2002 Bulletin 2002/09**

(73) Proprietor: **LUCENT TECHNOLOGIES INC.**
**Murray Hill, New Jersey 07974-0636 (US)**

(72) Inventors:
• **Chen, Tai-Ann**
  **Parsippany, NJ 07054 (US)**
• **Li, Kaiping**
  **Randolph, NJ 07869 (US)**
• **Meyers, Martin Howard**
  **Montclair, NJ 07043 (US)**
• **Qiu, Robert Caiming**
  **Morris Plains, NJ 07950 (US)**
• **Weaver, Carl Francis**
  **Morris Plains, Morris, NJ 07950 (US)**

(74) Representative:
**Buckley, Christopher Simon Thirsk et al**
**Lucent Technologies (UK) Ltd,**
**5 Mornington Road**
**Woodford Green, Essex IG8 0TU (GB)**

(56) References cited:
**EP-A- 0 709 973**      **EP-A- 0 853 393**
**WO-A-00/27045**      **WO-A-00/33478**
**WO-A-00/45528**      **WO-A-94/18756**

**Description**

This invention relates to methods of power control in wireless communications systems.

Wireless communications systems incorporate power control techniques to improve system performance and increase system capacity. The fundamental objective of power control is to set a transmit power level such that a desired quality of service (QOS) for a communication link is obtained at a receiver, wherein quality of service may be measured in terms of frame error rate (FER), bit error rate (BER) or symbol error rate (SER). Power control is achieved by tracking fades in the communication link and compensating for such fades through manipulation of transmit power at base stations and/or mobile-stations in order to maintain the desired quality of service.

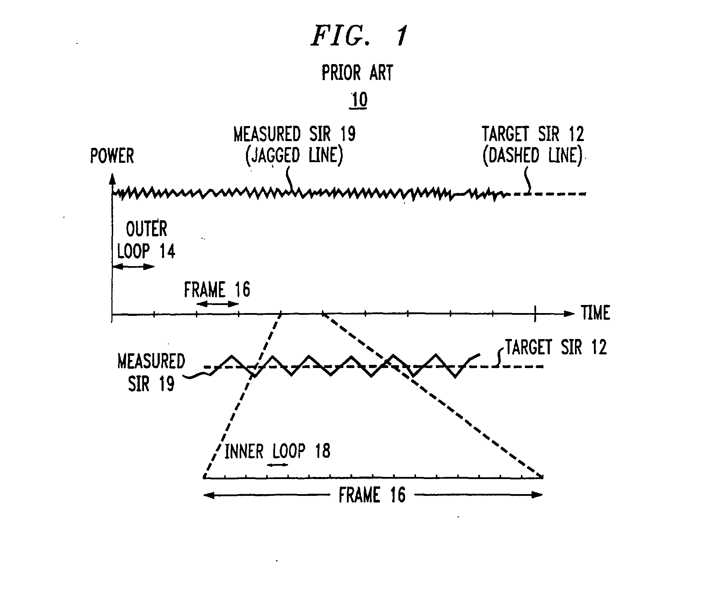

Power control techniques for wireless communications systems based on code division multiple access (CDMA) include outer and inner power control loops. FIG. 1 depicts an illustration 10 of outer and inner power control loops. Outer power control loops involve, for each communication link, setting a target signal-to-interference ratio (SIR) 12 (or other target control threshold) that will achieve a desired FER (or other QOS parameter), which is typically one percent. For purposes of this application, the term signal-to-interference ratio or SIR should be construed to include signal-to-interference ratio, carrier-to-interference ratio, signal-to-noise ratio, carrier-to-noise ratio, or other similar measurements.

An initial target SIR is set based on the desired FER. Upon setting the initial target SIR, frame errors are measured over a time interval referred to herein as an outer loop period 14. Typically, outer loop period 14 is equivalent to one frame 16, wherein a frame spans a duration of 20 ms. During an outer loop period, a frame is measured for errors. Whether or not the frame has errors, the result of the measurement is added to previously measured frames to establish an average or moving average measured FER. Typically, one thousand frames are measured to establish the average or moving average measured FER. Such average gives a 95% confidence level.

After each outer loop period, if the measured frame errors produce an average or moving average measured FER greater than the desired FER, the target SIR 12 is increased an up SIR step size for the next outer loop period 14. If the measured frame errors produces an average or moving average measured FER less than or equal to the desired FER, the target SIR 12 is decreased a down SIR step size for the next outer loop period 14. Thus, the measured FER is used to adjust the target SIR 12.

The ratio between the down SIR step size and the up SIR step size corresponds to the ratio between good and bad frames. If the desired FER is less than half, i.e., 50%, the down SIR step size would be less than the up SIR step size. For example, for a desired FER of 1%, the down and up SIR step sizes would be approximately .01 dB and 1 dB, respectively.

Inner power control loops involve, for each communication link, manipulating transmit power at the base station and/or mobile-station according to the target SIR set by the outer power control loop in an attempt to remove fades and fluctuations in the communication link. Specifically, the inner power control loop measures SIR 19 (or its moving average) over a time interval referred to herein as an inner loop period 18. Typically, the inner loop period is equivalent to or more than a sixteenth of a frame, wherein a sixteenth of a frame is typically 1.25 ms. For inner loop power control, the measured (or moving average measured) SIR is compared to the target SIR. If the measured (or moving average measured) SIR 19 is greater than the target SIR 12, the receiving entity (e.g., base station) indicates to the transmitting entity (e.g., mobile-station) to increase its transmit power an up transmit step size (thereby increasing actual and measured SIR). By contrast, if the measured (or moving average measured) SIR 19 is less than the target SIR 12, the receiving entity indicates to the transmitting entity to decrease its transmit power a down transmit step size (thereby decreasing actual and measured SIR), wherein the up and down transmit steps may be identical or different sizes.

As mentioned earlier, the fundamental objective of power control is to set a transmit power level which would track and compensate for fades in the communication link such that the desired QOS for the communication link is obtained at the receiver. The typical inner power control loop attempts to remove fades or fluctuations in the communication link but can only do so at time intervals greater than a duration referred to herein as a power control group (PCG), which spans a duration of 1.25 ms. If the inner power control loop was faster, i.e., shorter in duration than the PCG, there may be no need for the outer power control loop because the target SIR would simply be a SIR required for the desired FER in an additive white gaussian noise (AWGN) channel.

Since some fading occurs over shorter time intervals than the PCG, the fundamental objective of power control is not always met by the inner loop power control loop only. Depending on whether or not there exists such high speed fading, the target SIR required to obtain the desired FER can change more quickly than the ability of the receiver to estimate or measure FER in order to set the target SIR. In other words, such inability to estimate or measure FER when the environment changes, e.g., varying mobile speeds, would make it difficult to set a proper target SIR. Therefore, outer power control loop methods that use measured FER to set the target SIR will typically perform poorly in high speed fading situations, and a need exists for a more expedient outer power control loop technique.

WO 00/45528 discloses a power control system for controlling the transmission power in a system wherein the transmission power may be gated or capped. The receiver employs a combination of closed loop and outer loop power control. The outer loop is frozen upon detection by the receiver that the signal has been capped or gated.

According to this invention there is provided a method as claimed in claim 1.

The present invention is a method for expediting power control using a channel condition estimation scheme, wherein channel condition estimation corresponds to measuring or estimating channel parameters including mobile-station velocity, Doppler spread, K-factor, k-factor= 10*log 10(k) (disclosed in the publication entitled "the Mobile Radio Propagation Channel" by J. D.Parsons, published by Halsted Press in 1992) number of multi-paths, strengths of each multi-path, and mean, variance and auto-correlation function of received SIR in a power control group or other time interval. The present invention measures one or more channel condition and uses the measured channel condition, along with a quality of service parameter, to determine a target control threshold based on a function relationship between the channel condition, quality of service parameter and target control threshold. At least one of the measured channel conditions is one of the following: K-factor; signal strengths of each of a plurality of multi-paths; a mean value of received SIR in each PCG over a frame interval; a variance value of received SIR in each PCG over a frame interval; and a correlation function of received SIR in each PCG over a frame interval. Advantageously, the channel condition can be estimated or measured in a much shorter time interval than quality of service parameters, such as frame error rate or bit error rate, thereby allowing for more power control.

**Brief Description of the Drawings**

The features, aspects, and advantages of the present invention will become better understood with regard to the following description, appended claims, and accompanying drawings where:

FIG. 1 depicts an illustration of outer and inner power control loops in accordance with the prior art;
FIG. 2 depicts a plurality of functional relationship tables depicting relationships between mobile-station velocity, FER and target SIR;

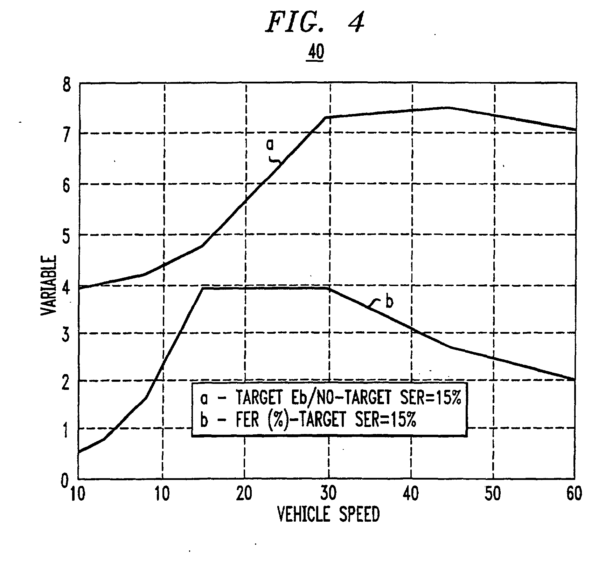

FIGS. 3, 4 and 5 depict charts having a plurality of curves extrapolated from the plurality of functional relationship tables of FIG. 2; and
FIG. 6 depicts a flowchart illustrating an outer power control loop using tables of FIG. 2,

Detailed Description

The present invention uses one or more functional relationships between one or more channel conditions and one or more quality of service (QOS) parameters to set one or more target control thresholds. Channel conditions are physical parameters that include mobile-station velocity, Doppler shift or spread, K-factor, number of multi-paths, strengths of each multi-path, amplitudes, correlation function of average power control group (PCG) signal-to-interference ratio (SIR) and propagation delay. The manners in which channel conditions may be measured are well-known in the art. See Appendix A, which describes one manner of measuring Doppler shift. QOS parameters are abstract parameters relating to merits of service, whereas target control thresholds are physical parameters corresponding to the QOS parameters. QOS parameters and target control thresholds include, but are not limited to, signal-to-interference ratio, signal level, frame error rate (FER), bit error rate (BER), block error rate (BLER) and symbol error rate (SER).

The functional relationships between channel conditions, QOS parameters and/or target control thresholds are complex relationships which can be derived using a variety of techniques before attempting to perform power control. One technique of deriving the functional relationships involves system modeling using a computer simulation based on theoretical relationships between the channel conditions, QOS parameters and control thresholds, as is well known in the art. Controlled laboratory tests and field tests can also be used to derive the functional relationships, or to enhance the results of the functional relationships derived through system modeling. Note that functional relationships between channel conditions, QOS parameters and/or target control thresholds may differ from cell to cell due, for example, to terrain.

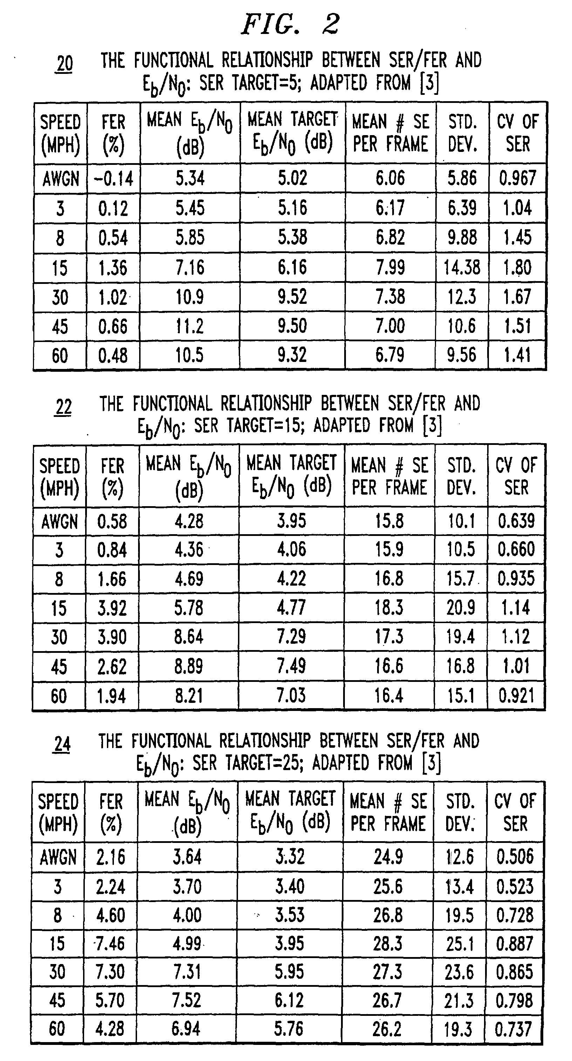

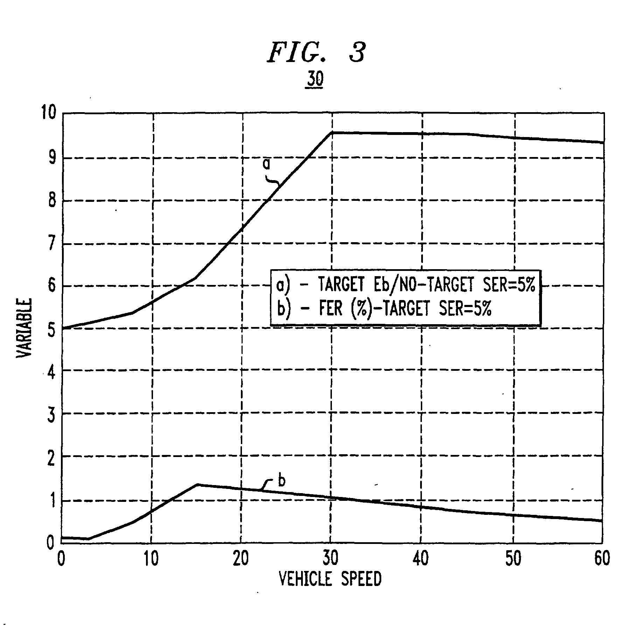

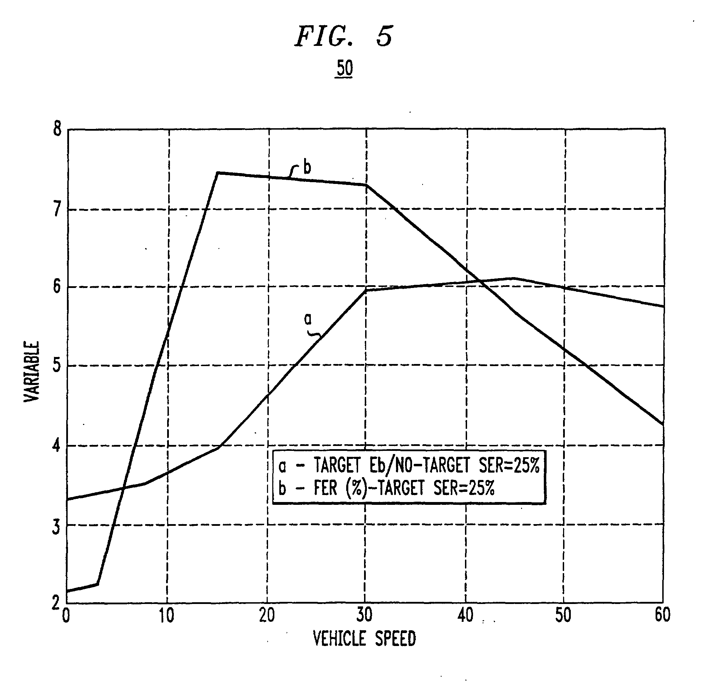

Generally, the functional relationships are derived from one or more of the aforementioned techniques in the form of tables from which curves may be extrapolated. FIG. 2 depicts a plurality of functional relationship tables 20, 22 and 24 derived from system modeling, controlled laboratory tests and field tests for target SERs of 5%, 15% and 25%, respectively, depicting relationships between mobile-station velocity, FER and target SIR. FIGS. 3, and 5 depict charts 30, 40and 50 having a plurality of curves a and b extrapolated from the plurality of functional relationship tables 20, 22 and 24, wherein curves a and b correspond to target SIR (measured in terms of

$$E_b \big/ N_o$$

) and FER, respectively. For purposes of discussion, the present invention will be described herein with respect to SIR as the target control threshold, mobile-station velocity as the channel condition and FER as the quality of service parameter. This should not be construed, however, to limit the present invention in any manner.

The present invention is equally applicable to setting other target control thresholds using other channel conditions and quality of service parameters.

Suppose a mobile-station is traveling at a speed of 8 miles per hour (mph) and the desired FER is approximately 0.54% (or target SER is 5%). Based on table 20 (or curves and b of chart 30) the desired FER can be obtained for such channel condition, i.e., mobile-station traveling at 8 mph, if the target SIR is set or adjusted to 5.38 dB. Suppose the desired FER is approximately 1.66% (or target SER is 15%). Based on table 22 (or curves a and b of chart 40), such desired FER can be obtained for a mobile-station traveling at 8 mph if the target SIR is set to 4.22 dB. Suppose the desired FER is approximately 1.00% and the mobile-station is traveling at 8 mph. In this case, the target SIR can be extrapolated from tables 20 and 22. For example, the target SIR for a desired FER of approximately 1.00%, as extrapolated from tables 20 and 22 in a prorated manner, would be approximately 4.90 dB. Note that other manners of extrapolation are possible, or tables 20, 22 and 24 may be derived with finer resolution.

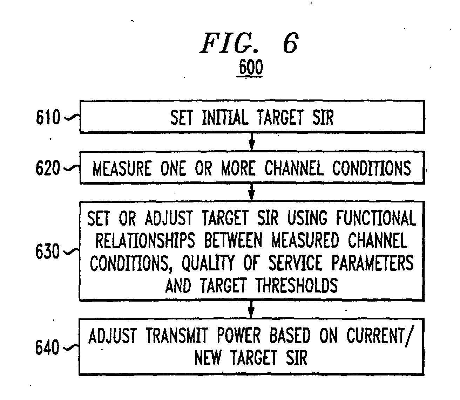

FIG. 6 depicts a flowchart 600 illustrating an outer power control loop using tables 20, 22 and 24 of FIG. 2. In step 610, an initial target SIR is set. In one embodiment, the initial target SIR is set according to a desired QOS parameter (e.g., FER) using a functional relationship, as is well known in the art. In another embodiment, the initial target SIR is set according to a desired QOS parameter and one or more channel conditions (e.g., mobile-station velocity) using a functional relationship table. In step 620, one or more channel conditions are measured or estimated during an outer loop period. In step 630, the target SIR is set or adjusted based on the measured channel condition(s) and function relationships between channel conditions, quality of service parameters and target SIR. Note that the target SIR can be adjusted in one or more steps using up SIR and/or down SIR steps, wherein the size of the up and down SIR steps may or may be identical. In one embodiment, the ratio between the sizes of the down and up SIR steps correspond to the desired QOS parameter. In step 640, transmit power of the mobile-station is adjusted based on the new target SIR in accordance with an inner power control loop.

In another embodiment of the present invention, mean, variance and auto-correlation function of received SIR in each PCG (hereinafter referred to as "PCG SIR") with maximum lag over one or more frames are calculated at a receiver. If the inner loop is closed and properly tracking the fading in the communication link, the mean PCG SIR should be equal to a current target SIR. The variance PCG SIR would be proportional to the K factor and seed, and a correlation time of the auto-correlation function should be proportional to the speed. In another embodiment, the receiver can calculate mean, variance and auto-correlation function of PCG SIR samples and SER over one or more frames.

Although the present invention has been described in considerable detail with reference to certain embodiments, other versions are possible. For example, the present invention is equally applicable to wireless communications systems employing multiple access techniques other than CDMA, such as time division multiple access.

**Claims**

1. A method of power control in wireless communication systems comprising the steps of:

   measuring one or more channel conditions, the channel conditions being K-factor, wherein K-factor is 10*log10(k); mobile-station velocity; Doppler spread; number of multi-paths; signal strengths of each of a plurality of multi-paths; a mean value of received SIR in each PCG over a frame interval; a variance value of received SIR in each PCG over a frame interval; and a correlation function of received SIR in each PCG over a frame interval; and
   determining a target control threshold using the one or more measured channel conditions and a table correlating the one or more channel conditions to the target control threshold based on a desired quality of service parameter,

   **characterized in that** at least one of the measured channel conditions is one of the following: K-factor; signal strengths of each of a plurality of multi-paths; a mean value of received SIR in each PCG over a frame interval; a variance value of received SIR in each PCG over a frame interval; and a correlation function of received SIR in each PCG over a frame interval.

2. A method as claimed in claim 1, wherein the table is associated with a cell and is derived using a computer simulation based on theoretical relationships between the one or more channel conditions, target control threshold and desired quality of service parameter.

3. A method as claimed in claim 1, wherein the target control threshold is signal-to-interference ratio.

4. A method as claimed in claim 1, wherein the quality of service parameter is frame error rate.

5. A method as claimed in claim 1, wherein the quality of service parameter is symbol error rate.

6. A method as claimed in claim 1, wherein the quality of service parameter is bit error rate.

**7.** A method as claimed in claim 1, wherein the one or more channel conditions are measured over an outer loop period.

**8.** A method as claimed in claim 7, wherein the outer loop period spans a duration of at least one frame but no more than ten frames.

**9.** A method as claimed in claim 1, comprising the step of adjusting a transmit power for a communication link using the target control threshold.

**Patentansprüche**

**1.** Verfahren zur Leistungsregelung in drahtlosen Kommunikationssystemen, mit folgenden Schritten:

Messen eines oder mehrerer Kanalzustände, wobei die Kanalzustände der K-Faktor sind, wobei der K-Faktor 10*log10(k) ist; die Geschwindigkeit der Mobilstation; die Doppler-Verbreiterung; die Anzahl von Mehrwegeübertragungen; die Signalstärken jeder von mehreren Mehrwegeübertragungen; ein Mittelwert empfangener Signal/Störleistungsverhältnisse in jeder Leistungsregelgruppe über ein Rahmenintervall; ein Varianzwert empfangener Signal/Störleistungsverhältnisse in jeder Leistungsregelgruppe über ein Rahmenintervall; und eine Korrelationsfunktion empfangener Signal/Störleistungsverhältnisse in jeder Leistungsregelgruppe über ein Rahmenintervall; und
Bestimmen eines Ziel-Regelschwellwerts unter Verwendung der einen oder mehreren gemessenen Kanalzustände und einer Tabelle, die den einen oder die mehreren Kanalzustände mit dem Ziel-Regelschwellwert auf Grundlage eines gewünschten Dienstegüteparameters korreliert, **dadurch gekennzeichnet, daß** mindestens einer der gemessenen Kanalzustände einer der folgenden ist: K-Faktor; Signalstärken von jeder von mehreren Mehrwegeübertragungen; ein Mittelwert empfangener Signal/Störleistungsverhältnisse in jeder Leistungsregelgruppe über ein Rahmenintervall; ein Varianzwert empfangener Signal/Störleistungsverhältnisse in jeder Leistungsregelgruppe über ein Rahmenintervall; und eine Korrelationsfunktion empfangener Signal/Störleistungsverhältnisse in jeder Leistungsregelgruppe über ein Rahmenintervall.

**2.** Verfahren nach Anspruch 1, wobei die Tabelle einer Zelle zugeordnet ist und unter Verwendung einer auf theoretischen Verhältnissen zwischen dem einen oder den mehreren Kanalzuständen, dem Ziel-Regelschwellwert und dem gewünschten Dienstegüteparameter basierenden Computersimulation abgeleitet wird.

**3.** Verfahren nach Anspruch 1, wobei der Ziel-Regelschwellwert das Signal/Störleistungsverhältnis ist.

**4.** Verfahren nach Anspruch 1, wobei der Dienstegüteparameter die Rahmenfehlerrate ist.

**5.** Verfahren nach Anspruch 1, wobei der Dienstegüteparameter die Symbolfehlerrate ist.

**6.** Verfahren nach Anspruch 1, wobei der Dienstegüteparameter die Bitfehlerrate ist.

**7.** Verfahren nach Anspruch 1, wobei der eine oder die mehreren Kanalzustände über eine Periode der äußeren Regelschleife gemessen werden.

**8.** Verfahren nach Anspruch 7, wobei die Periode der äußeren Regelschleife eine Dauer von mindestens einem Rahmen, aber nicht mehr als zehn Rahmen überspannt.

**9.** Verfahren nach Anspruch 1 mit dem Schritt des Einstellens einer Sendeleistung für eine Kommunikationsstrecke unter Verwendung des Ziel-Regelschwellwerts.

**Revendications**

**1.** Procédé de commande de puissance dans des systèmes de communication sans fil comprenant les étapes de :

mesure d'une ou de plusieurs conditions de canal, les conditions de canal étant le facteur K, où le facteur K est 10*log10(k) ; la vitesse de la station mobile ; l'étalement Doppler ; le nombre de trajets multiples ; les forces de signal de chacun d'une pluralité de trajets multiples ; une valeur moyenne du SIR reçu dans chaque PCG durant un intervalle de trame ; une valeur d'écart du SRI reçu dans chaque PCG durant un intervalle de trame ; et une fonction de corrélation du SIR reçu dans chaque PCG durant un intervalle de trame ; et
détermination d'un seuil de commande cible en utilisant les une ou plusieurs conditions mesurées et une table corrélant les une ou plusieurs conditions de canal avec le seuil de commande cible en fonction d'une qualité désirée de paramètre de service, **caractérisé en ce qu'**au moins une des conditions de canal mesurées est l'une des suivantes : le facteur K ; les forces de signal de chacun d'une pluralité de trajets multiples ; une valeur moyenne du SIR reçu dans chaque PCG durant un intervalle de trame ; une valeur d'écart du SRI reçu dans chaque PCG durant un intervalle de trame ; et une fonction de corrélation du SIR reçu dans chaque PCG durant un intervalle de trame.

2. Procédé selon la revendication 1, dans lequel la table est associée à une cellule et est dérivée en utilisant une simulation d'ordinateur basée sur des relations théoriques entre les une ou plusieurs 'conditions de canal, le seuil de commande cible et la qualité désirée de paramètre de service.

3. Procédé selon la revendication 1, dans lequel le seuil de commande cible est le rapport signal sur brouillage.

4. Procédé selon la revendication 1, dans lequel le paramètre de qualité de service est le taux d'erreurs sur les trames.

5. Procédé selon la revendication 1, dans lequel le paramètre de qualité de service est le taux d'erreurs sur les symboles.

6. Procédé selon la revendication 1, dans lequel le paramètre de qualité de service est le taux d'erreurs sur les bits.

7. Procédé selon la revendication 1, dans lequel les une ou plusieurs conditions de canal sont mesurées durant une période de boucle externe.

8. Procédé selon la revendication 7, dans lequel la période de boucle externe couvre une durée d'au moins une trame mais de pas plus de dix trames.

9. Procédé selon la revendication 1, dans lequel l'étape de réglage d'une puissance d'émission d'une liaison de communication au moyen du seuil de commande cible.

## *FIG. 1*

### PRIOR ART

<u>10</u>

## FIG. 2

<u>20</u>  THE FUNCTIONAL RELATIONSHIP BETWEEN SER/FER AND
$E_b/N_0$: SER TARGET=5; ADAPTED FROM [3]

| SPEED (MPH) | FER (%) | MEAN $E_b/N_0$ (dB) | MEAN TARGET $E_b/N_0$ (dB) | MEAN # SE PER FRAME | STD. DEV. | CV OF SER |
|---|---|---|---|---|---|---|
| AWGN | −0.14 | 5.34 | 5.02 | 6.06 | 5.86 | 0.967 |
| 3 | 0.12 | 5.45 | 5.16 | 6.17 | 6.39 | 1.04 |
| 8 | 0.54 | 5.85 | 5.38 | 6.82 | 9.88 | 1.45 |
| 15 | 1.36 | 7.16 | 6.16 | 7.99 | 14.38 | 1.80 |
| 30 | 1.02 | 10.9 | 9.52 | 7.38 | 12.3 | 1.67 |
| 45 | 0.66 | 11.2 | 9.50 | 7.00 | 10.6 | 1.51 |
| 60 | 0.48 | 10.5 | 9.32 | 6.79 | 9.56 | 1.41 |

<u>22</u>  THE FUNCTIONAL RELATIONSHIP BETWEEN SER/FER AND
$E_b/N_0$: SER TARGET=15; ADAPTED FROM [3]

| SPEED (MPH) | FER (%) | MEAN $E_b/N_0$ (dB) | MEAN TARGET $E_b/N_0$ (dB) | MEAN # SE PER FRAME | STD. DEV. | CV OF SER |
|---|---|---|---|---|---|---|
| AWGN | 0.58 | 4.28 | 3.95 | 15.8 | 10.1 | 0.639 |
| 3 | 0.84 | 4.36 | 4.06 | 15.9 | 10.5 | 0.660 |
| 8 | 1.66 | 4.69 | 4.22 | 16.8 | 15.7 | 0.935 |
| 15 | 3.92 | 5.78 | 4.77 | 18.3 | 20.9 | 1.14 |
| 30 | 3.90 | 8.64 | 7.29 | 17.3 | 19.4 | 1.12 |
| 45 | 2.62 | 8.89 | 7.49 | 16.6 | 16.8 | 1.01 |
| 60 | 1.94 | 8.21 | 7.03 | 16.4 | 15.1 | 0.921 |

<u>24</u>  THE FUNCTIONAL RELATIONSHIP BETWEEN SER/FER AND
$E_b/N_0$: SER TARGET=25; ADAPTED FROM [3]

| SPEED (MPH) | FER (%) | MEAN $E_b/N_0$ (dB) | MEAN TARGET $E_b/N_0$ (dB) | MEAN # SE PER FRAME | STD. DEV. | CV OF SER |
|---|---|---|---|---|---|---|
| AWGN | 2.16 | 3.64 | 3.32 | 24.9 | 12.6 | 0.506 |
| 3 | 2.24 | 3.70 | 3.40 | 25.6 | 13.4 | 0.523 |
| 8 | 4.60 | 4.00 | 3.53 | 26.8 | 19.5 | 0.728 |
| 15 | 7.46 | 4.99 | 3.95 | 28.3 | 25.1 | 0.887 |
| 30 | 7.30 | 7.31 | 5.95 | 27.3 | 23.6 | 0.865 |
| 45 | 5.70 | 7.52 | 6.12 | 26.7 | 21.3 | 0.798 |
| 60 | 4.28 | 6.94 | 5.76 | 26.2 | 19.3 | 0.737 |

## FIG. 3
### 30

Legend:
a) – TARGET Eb/NO-TARGET SER=5%
b) – FER (%)-TARGET SER=5%

X-axis: VEHICLE SPEED
Y-axis: VARIABLE

## FIG. 4

<u>40</u>

## FIG. 5

<u>50</u>

## FIG. 6

<u>600</u>

610 — SET INITIAL TARGET SIR

620 — MEASURE ONE OR MORE CHANNEL CONDITIONS

630 — SET OR ADJUST TARGET SIR USING FUNCTIONAL RELATIONSHIPS BETWEEN MEASURED CHANNEL CONDITIONS, QUALITY OF SERVICE PARAMETERS AND TARGET THRESHOLDS

640 — ADJUST TRANSMIT POWER BASED ON CURRENT/ NEW TARGET SIR